# EUROPÄISCHE PATENTSCHRIFT

(11) **EP 4 315 156 B1**
(45) Veröffentlichungstag und Bekanntmachung des Hinweises auf die Patenterteilung: **28.01.2026**
(21) Anmeldenummer: 22718862.0
(22) Anmeldetag: 23.03.2022
(51) Int. Cl.: G06K 17/00, G06K 19/07, G06K 7/10

(54) **VERFAHREN ZUR BESTIMMUNG EINES WERTS EINER ELEKTROMAGNETISCHEN FELDSTÄRKE, VERFAHREN ZUR KOPPLUNG EINES LESEGERÄTS, CHIPKARTE SOWIE LESEGERÄT FÜR EINE CHIPKARTE**
METHOD FOR DETERMINING A VALUE OF AN ELECTROMAGNETIC FIELD STRENGTH, METHOD FOR COUPLING A READER, CHIP CARD, AND READER FOR A CHIP CARD
PROCÉDÉ DE DÉTERMINATION D'UNE VALEUR D'INTENSITÉ DE CHAMP ÉLECTROMAGNÉTIQUE, PROCÉDÉ DE COUPLAGE D'UN APPAREIL DE LECTURE, CARTE À PUCE ET APPAREIL DE LECTURE POUR CARTE À PUCE

(30) Priorität: 25.03.2021 DE 102021001583
(43) Veröffentlichungstag der Anmeldung: 07.02.2024
(73) Patentinhaber: Giesecke+Devrient ePayments GmbH, 81677 München (DE)
(72) Erfinder: BALDISCHWEILER, Michael, 81825 München (DE)
(74) Vertreter: Giesecke+Devrient IP
(86) Internationale Anmeldenummer: PCT/EP2022/025119
(87) Internationale Veröffentlichungsnummer: WO 2022/199895

(56) Entgegenhaltungen:
- EP-B1- 3 070 636
- EP-B1- 3 278 265
- DE-A1- 102004 039 650
- FINKENZELLER ET AL: "RFID HANDBOOK: GRUNDLAGEN UND PRAKTISCHE ANWENDUNGEN INDUKTIVER FUNKANLAGEN, TRANSPONDER UND KONTAKTLOSER CHIPKARTEN", RFID HANDBOOK: GRUNDLAGEN UND PRAKTISCHE ANWENDUNGEN, XX, XX, 26 September 2002 (2002-09-26), pages 267 - 271, XP002347418

## Beschreibung

Die Erfindung betrifft ein Verfahren zur Bestimmung eines Werts einer elektromagnetischen Feldstärke und eine Chipkarte.

Derartige Verfahren sind beispielsweise aus EP 3 278 265 B1, EP 3 070 636 B1, De 10 2004 039650 A1 oder Finkenzeller et al: "RFID Handbook: Grundlagen und praktische Anwendungen induktiver Funkanlagen, Transponder und kontaktloser Chipkarten" (2002) bekannt.

Kartenförmige Datenträger, insbesondere Chipkarten, werden in vielen Bereichen eingesetzt, beispielsweise zur Durchführung von Transaktionen des bargeldlosen Zahlungsverkehrs, als Ausweisdokumente oder zum Nachweis von Zugangsberechtigungen. Eine Chipkarte weist einen Kartenkörper und einen in den Kartenkörper eingebetteten integrierten Schaltkreis zum Beispiel in Form eines Chipmoduls mit einem Chip auf. Das Chipmodul wird in eine Kavität oder Modulöffnung des Kartenkörpers eingesetzt.

Im Folgenden werden Chipmodule oder Chipkarten mit integrierter Spule betrachtet, welche eine berührungslose oder kontaktlose Kommunikation ermöglichen. Beispielsweise können Chipkartencontroller mit RFID-Funktionalität eingesetzt werden. Es können zudem Kartenkörper mit einem metallischen Kern in Form einer metallischen Kernschicht oder eines metallischen Kernelements betrachtet werden, sowie Karten mit Dual Interface (DI)-Funktionalität, bei dem der Kartenkörper zum Teil oder vollständig aus Metall besteht. Die Funktionsweise einer solchen Karte besteht darin, dass ein Chipmodul verwendet wird, das selbst eine Spule enthält (Coil On Modul). Diese Spule koppelt auf den metallischen Kartenkörper.

In der Praxis kann die Kenntnis der an einer Chipkarte anliegenden elektromagnetischen Feldstärke von Interesse sein, zum Beispiel bei der Produktion der Chipkarte in Form eines Funktionstests oder bei der Kommunikation oder Kopplung der Chipkarte mit einem Lesegerät.

Bei den Produktionsmaschinen für Chipkarten lässt sich die elektromagnetische Feldstärke mit Hilfe von Messgeräten und -systemen jedoch nicht ohne weiteres ermitteln. Die Messsysteme sind so aufgebaut, dass eine Spule in Form einer ID1-Karte in das entsprechende Feld gehalten wird und aus deren induzierter Energie die Feldstärke berechnet wird. Die Spule selbst ist über ein Kabel mit dem Messsystem verbunden. Diese Kabelverbindung ist störend, da in den Produktionsmaschinen eine mechanische Bewegung des Lesers oder der Karte stattfindet. Zudem ist ein solches Messsystem recht teuer.

Alternativ kann eine sogenannte REF-PICC zur Messung der elektromagnetischen Feldstärke eingesetzt werden. Dieser Aufbau ist gegenüber einem Messsystem wesentlich billiger, aber auch um einiges größer als eine ID1-Karte und muss zudem mit einem Kabel an ein Voltmeter angeschlossen werden. Auch diese Lösung ist somit nicht geeignet für die Einstellung von Feldstärken in den Produktionsmaschinen.

Die beiden genannten Verfahren sind ebenfalls nicht für alltägliche Anwendungen zwischen einer Chipkarte und einem Lesegerät geeignet.

Aufgabe der vorliegenden Erfindung ist es daher, die Kommunikation zwischen einer Chipkarte und den Lesegeräten zu verbessern.

Diese Aufgabe wird durch ein Verfahren zur Bestimmung eines Werts einer elektromagnetischen Feldstärke und eine Chipkarte gemäß den unabhängigen Patentansprüchen gelöst. Ausgestaltungen und Weiterbildungen der Erfindung sind in den abhängigen Ansprüchen angegeben.

Ein erfindungsgemäßes Verfahren zur Bestimmung eines Werts einer elektromagnetischen Feldstärke mittels einer Chipkarte umfasst die Schritte des
- Bereitstellens einer Chipkarte mit einer Spule und einer integrierten Schaltung;
- Kalibrierens der Chipkarte mittels unterschiedlicher Werte einer elektromagnetischen Feldstärke, wobei jeweils eine Leistung der integrierten Schaltung zu einem bestimmten Wert der elektromagnetischen Feldstärke ermittelt wird;
- Erstellens einer Korrelation der unterschiedlichen Werte der elektromagnetischen Feldstärken mit jeweils einer entsprechenden Leistung der integrierten Schaltung;
- Anlegens einer elektromagnetischen Feldstärke von unbekanntem Wert an die Chipkarte;
- Ermittelns einer Leistung der integrierten Schaltung; und des
- Bestimmens des dieser Leistung entsprechenden Werts der elektromagnetischen Feldstärke mittels der Korrelation.

Ein Grundgedanke der vorliegenden Erfindung besteht darin, dass ein Bezug oder eine Korrelation zwischen der an einer Chipkarte anliegenden elektromagnetischen Feldstärke, insbesondere der magnetischen Feldstärke H, und einer Leistung der Chipkarte verwendet wird. Auf diese Weise kann zum Beispiel die elektromagnetische Feldstärke genau bestimmt werden. Dabei funktioniert die Chipkarte als Messinstrument, so dass keine besonderen Messgeräte verwendet werden müssen.

Typische elektromagnetische Feldstärken für eine Kommunikation zwischen einer Chipkarte und einem Lesegerät liegen zum Beispiel in einem Bereich zwischen 1,5 A/m und 7,5 A/m. Die integrierte Schaltung kann zum Beispiel einen Prozessor aufweisen. Die Korrelation kann zum Beispiel als Tabelle, Matrix oder ähnliches ausgebildet sein.

Das hier vorgeschlagene Chipmodul hat somit den Vorteil, dass auf einfache Weise nur mit einer Chipkarte die elektromagnetische Feldstärke genau bestimmt werden kann. Dies kann zum Beispiel in bewegten Systemen von Produktionsmaschinen geschehen, da die Chipkarte kontaktlos kommuniziert, so dass kein störendes Kabel vorhanden ist. Das hier vorgeschlagene Verfahren kann auch für die Kalibrierung von Leseköpfen in Produktionsmaschinen verwendet werden. Zudem können elektromagnetische Feldstärken von unbekannten Systemen ermittelt werden, bei denen zum Beispiel die Position der Lesespule im Gerät nicht bekannt ist.

Es kann vorgesehen sein, dass die Korrelation der unterschiedlichen Werte der elektromagnetischen Feldstärken mit jeweils einer entsprechenden Leistung der integrierten Schaltung in der Chipkarte abgelegt wird und dass der entsprechende Wert der elektromagnetischen Feldstärke von der Chipkarte an das Lesegerät ausgegeben wird. Auf diese Weise kann die Chipkarte direkt einen absoluten Feldstärkewert ausgeben. Ebenso ist es möglich, dass die Chipkarte einen oder mehrere Parameter ausgibt, wie zum Beispiel relative Änderungen oder Angaben zu einer Leistung der integrierten Schaltung. Dann kann anhand der Korrelation ein Wert der elektromagnetischen Feldstärke auch außerhalb der Chipkarte, zum Beispiel in dem Lesegerät, bestimmt werden.

Es kann ferner vorgesehen sein, dass die Leistung der integrierten Schaltung durch ein abgearbeitetes Arbeitspensum während einer definierten Zeitspanne, eine Zeitangabe für ein abgearbeitetes, definiertes Arbeitspensum und/oder eine erreichte Betriebsfrequenz der integrierten Schaltung ermittelt wird. Dies sind beispielhafte Angaben für ein Maß der von der integrierten Schaltung aufgenommenen Energie oder anders ausgedrückt von dem Energieeintrag in die Chipkarte. Die Betriebsfrequenz, und damit die Leistungsfähigkeit, der integrierten Schaltung oder eines Prozessors in der integrierten Schaltung hängt direkt von der anliegenden elektromagnetischen Feldstärke an der Chipkarte ab.

Es kann vorgesehen sein, dass ein Lesegerät ein definiertes Speedtest-Kommando an die Chipkarte ausgibt. Die Verwendung eines Speedtest-Kommandos wurde zuerst in der DE102015004314A1 beschrieben und hat den Vorteil, dass ein definiertes und von einer Vielzahl von Geräten, insbesondere Produktionsmaschinen unterstütztes Kommando vorliegt. Das Speedtest-Kommando kann mit Hilfe der Trägerfrequenz von 13,56 MHz ermittelt werden. Das Speedtest-Kommando kann eine einstellbare Wartezeit für die Antwort der Chipkarte umfassen. Mit Ablauf der Wartezeit kann die Chipkarte ein Rechenergebnis ausgeben, so dass aus dem Ergebnis und der Zeitspanne der Wartezeit auf die Feldstärke geschlossen werden kann.

Es kann ferner vorgesehen sein, dass die Chipkarte die Leistung der integrierten Schaltung und/oder den entsprechenden Wert der elektromagnetischen Feldstärke in Historical Bytes des Speedtest-Kommandos im ATS ausgibt. So können Werte auf einfache Weise von der Chipkarte übertragen werden ohne dass neue Kommandos eingeführt werden müssen.

Ein offenbartes Verfahren zur Kopplung eines Lesegeräts und einer Chipkarte mit einer Spule und mit einer integrierten Schaltung umfasst die Schritte des
- Aussendens eines elektromagnetischen Felds mit einer elektromagnetischen Feldstärke durch das Lesegerät;
- Ermittelns einer Leistung der integrierten Schaltung gemäß der elektromagnetischen Feldstärke in der Chipkarte;
- Übermittelns eines Parameterwerts von der Chipkarte an das Lesegerät, wobei eine Höhe des Parameterwerts von der ermittelten Leistung abhängig ist; und des
- Bereitstellens eines Signals an dem Lesegerät für eine verbesserte relative Ausrichtung zwischen dem Lesegerät und der Chipkarte.

Auch hier besteht ein Grundgedanke darin, dass ein Bezug oder eine Korrelation zwischen der an einer Chipkarte anliegenden elektromagnetischen Feldstärke und einer Leistung der Chipkarte verwendet wird. Auf diese Weise kann zum Beispiel die relative Ausrichtung zwischen dem Lesegerät und der Chipkarte für eine optimierte Kommunikation oder Kopplung verbessert werden.

Wenn eine Chipkarte zur Bestimmung der Feldstärke und/oder zur Ermittlung der besten Position auf oder an einem unbekannten Gerät verwendet wird, kann das hier vorgeschlagene Verfahren zum Beispiel in einer Software oder App verwendet werden. Diese App kann über ein graphisches Interface verfügen, dass es dem Benutzer ermöglicht, die eingebrachte Feldstärke in Abhängigkeit der Chipkartenposition zu sehen. Verschiebt nun der Benutzer die Chipkarte, so werden die Daten graphisch in einer X/Y Ebene dargestellt. Alternativ oder zusätzlich kann hier auch ein Leistungsbalken angezeigt werden. Der Benutzer hat nun mit der Karte die Möglichkeit die bestmögliche Lage am Lesegerät zu ermitteln.

Ansonsten gelten die gleichen Vorteile und Modifikationen wie zuvor beschrieben.

Es kann vorgesehen sein, dass an dem Lesegerät mindestens eine Angabe zu einer Höhe der elektromagnetischen Feldstärke und/oder einer Position für die Chipkarte bereitgestellt wird. Diese Angabe oder Angaben können zum Beispiel optisch dargestellt werden, wie auf einem Display eines Smartphones oder eines anderen Lesegeräts. Zum Beispiel kann eine Umrandung eines Auflagebereichs für die Chipkarte dargestellt werden. Ebenso sind optische oder auch haptische Angaben oder Signale möglich.

Es kann ferner vorgesehen sein, dass das Lesegerät die Angabe bei einer relativen Bewegung zwischen dem Lesegerät und der Chipkarte aktualisiert. Auf diese Weise kann die Chipkarte oder auch das Lesegerät interaktiv zu einer Position mit dem besten Empfang geführt werden. Ein Benutzer kann so direkt zu dieser Position geführt werden. Ebenso ist ein automatisiertes Verfahren möglich, bei dem das Lesegerät und die Chipkarte wiederholt miteinander kommunizieren, um die beste Position zu ermitteln.

Eine erfindungsgemäße Chipkarte mit einer Spule und einer integrierten Schaltung sieht vor, dass in der integrierten Schaltung eine Korrelation von unterschiedlichen Werten von an die Chipkarte angelegten elektromagnetischen Feldstärken zu jeweils einer Leistung der integrierten Schaltung abgelegt und abrufbar ist.

Auch hier besteht ein Grundgedanke der vorliegenden Erfindung darin, dass ein Bezug oder eine Korrelation zwischen der an einer Chipkarte anliegenden elektromagnetischen Feldstärke und einer Leistung der Chipkarte verwendet wird. Auf diese Weise kann zum Beispiel die elektromagnetische Feldstärke genau bestimmt werden. Dabei funktioniert die Chipkarte als Messinstrument, so dass keine besonderen Messgeräte verwendet werden müssen. Es gelten die gleichen Vorteile und Modifikationen wie zuvor beschrieben.

Es kann vorgesehen sein, dass die integrierte Schaltung eingerichtet ist, in Antwort auf ein elektromagnetisches Feld, das von einem Lesegerät an die Chipkarte ausgesendet wird, eine Leistung der integrierten Schaltung zu ermitteln, den dieser Leistung entsprechenden Wert der elektromagnetischen Feldstärke mittels der Korrelation zu bestimmen und den Wert an das Lesegerät auszugeben. So kann direkt ein absoluter Wert der elektromagnetischen Feldstärke lediglich mittels der Chipkarte bestimmt werden.

Es kann ferner vorgesehen sein, dass mindestens zwei Spulen vorgesehen sind, die in unterschiedlichen Ausrichtungen angeordnet sind. Mit dieser Anordnung und/oder speziellen Geometrien von Spulen können dedizierte Messungen hinsichtlich der Spulenlage des Lesegeräts beziehungsweise einer Unförmigkeit des Leserfeldes ermittelt werden.

Ein offenbartes Lesegerät für eine Chipkarte mit einer Spule und mit einer integrierten Schaltung umfasst eine Sendeantenne eingerichtet zum Aussenden eines elektromagnetischen Felds mit einer elektromagnetischen Feldstärke an eine Chipkarte, eine Empfangsantenne eingerichtet zum Empfangen eines Parameterwerts von der Chipkarte, wobei eine Höhe des Parameterwerts von der ermittelten Leistung der integrierten Schaltung abhängig ist, und eine Bereitstellungsvorrichtung eingerichtet zum Bereitstellen eines Signals an dem Lesegerät für eine verbesserte relative Ausrichtung zwischen dem Lesegerät und der Chipkarte.

Auch hier besteht ein Grundgedanke darin, dass ein Bezug oder eine Korrelation zwischen der an einer Chipkarte anliegenden elektromagnetischen Feldstärke und einer Leistung der Chipkarte verwendet wird. Auf diese Weise kann zum Beispiel die relative Ausrichtung zwischen dem Lesegerät und der Chipkarte für eine optimierte Kommunikation oder Kopplung verbessert werden.

Mittels der Bereitstellungsvorrichtung können das oder die Signale zum Beispiel optisch dargestellt werden, wie auf einem Display eines Smartphones oder eines anderen Lesegeräts. Zum Beispiel kann eine Umrandung eines Auflagebereichs für die Chipkarte dargestellt werden. Ebenso sind optische oder auch haptische Angaben oder Signale möglich.

Ein Vorteil besteht darin, dass nun unterschiedliche Lesegeräte auf ein einheitliches Leserfeld eingestellt werden können, so dass die Chipkarten jeweils eine definierte Feldstärke erwarten können. Ansonsten gelten die gleichen Vorteile und Modifikationen wie zuvor beschrieben.

Die vorliegende Erfindung wird nachfolgend mit Bezug auf die beiliegenden Zeichnungen beispielhaft beschrieben. Darin zeigen
- Fig. 1:: eine Draufsicht einer Chipkarte;
- Fig. 2:: ein Ersatzschaltbild eines Chipmoduls der Chipkarte;
- Fig. 3:: eine prinzipielle Darstellung eines Kalibrierungsgeräts für eine Chipkarte;
- Fig. 4:: eine prinzipielle Darstellung eines Lesegeräts für eine Chipkarte;
- Fig. 5:: ein Flussdiagramm eines Verfahrens zur Bestimmung eines Werts einer elektromagnetischen Feldstärke mittels einer Chipkarte; und
- Fig. 6:: ein Flussdiagramm eines Verfahrens zur Kopplung eines Lesegeräts und einer Chipkarte.

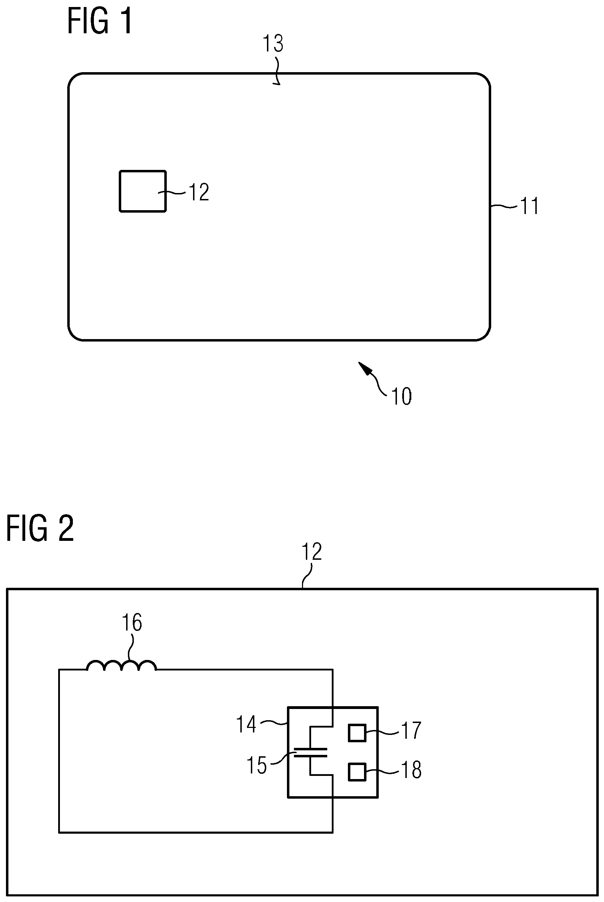

Fig. 1 zeigt eine Chipkarte 10 mit einem Kartenkörper 11. Der Kartenkörper 11 kann eine hier nicht dargestellte metallische Schicht umfassen, deren Hauptflächen jeweils mit einer Kunststoffschicht bedeckt sein können. Eine metallische Schicht kann zum Beispiel in Form eines Kerns oder einer Schicht aus einer Edelstahllegierung beispielsweise mit einer Dicke von 400 µm vorliegen. Die Dicke des Kartenkörpers 11 kann zum Beispiel zwischen 50 µm und 920 µm betragen.

Die Chipkarte 10 umfasst des Weiteren ein Chipmodul 12, das in eine Hauptfläche 13 des Kartenkörpers 11 oder der Chipkarte 10 eingesetzt ist. Das Chipmodul 12 kann in eine Modulöffnung oder Kavität eingesetzt sein. Die Kavität kann ein mittiges Sackloch und einen umlaufenden Randbereich umfassen. Hier ist die Kavität durch das eingesetzte Chipmodul 12 verdeckt. Das Chipmodul 12 kann in der Kavität verklebt sein.

In der metallischen Schicht kann ein Schlitz vorgesehen sein, der sich von einer Umfangsfläche oder einer Außenkante des Kartenkörpers 11 zu der Kavität erstreckt. Der Schlitz dient zur Vermeidung von Kurzschlussströmen beziehungsweise Wirbelströmen.

Das Chipmodul 12 kann eine Spule umfassen, die auf einem hier nicht dargestellten Modultape angeordnet sein kann. Die Spule kann etwa 12 bis 16 Windungen aufweisen, die konzentrisch um einen Chip oder einen elektronischen Schaltkreis des Chipmoduls 12 verlaufen. Die Breite einer Windung kann 50 µm bis 70 µm betragen und der Abstand zwischen zwei Windungen kann 100 µm betragen. Die Windungen können Kupferdicken bis zu etwa 30 µm aufweisen. Mit einer derartigen Spule können maximal 2.5 µH erreicht werden.

Der Chip kann zum Beispiel in Form einer integrierten Schaltung realisiert sein und ist zum Beispiel in einer Vergussmasse an einer Unterseite des Chipmoduls 12 befestigt. Über die Spule wird die integrierte Schaltung mit Energie und/oder Signalen versorgt. So kann ein elektromagnetisches Feld in die Spule eingekoppelt werden. Beispielsweise kann die integrierte Schaltung ein Chipkartencontroller mit RFID-Funktionalität sein oder diesen enthalten.

Fig. 2 zeigt ein Ersatzschaltbild des Chipmoduls 12 der Chipkarte 10. Das Chipmodul 12 umfasst die integrierte Schaltung 14 zum Beispiel in Form eines Chips. Die integrierte Schaltung 14 kann zum Beispiel auf das Chipmodul 12 aufgelötet sein oder per Flip-Chip-Montage auf das Chipmodul 12 aufgebracht worden sein. Die integrierte Schaltung 14 enthält einen Kartencontroller für die Chipkarte 10. Die integrierte Schaltung 14 enthält üblicherweise einen Prozessor zum Ausführen von Steuerungsfunktionen für die Chipkarte 10 und für die Kommunikation und zum Ausführen von Rechenoperationen zum Beispiel für Sicherheitsfunktionen. Zudem enthält die integrierte Schaltung 14 einen Speicherbereich zum Ablegen und/ oder Verfügbarmachen von Daten.

Die integrierte Schaltung 14 enthält ferner einen Kondensator 15 mit einer Kapazität von zum Beispiel 78 pF. Die Spule 16 ist parallel zu der integrierten Schaltung 14 geschaltet.

Die Spule 16 und der Kondensator 15 der integrierten Schaltung 14 bilden einen Schwingkreis. Mit Hilfe dieses Schwingkreises kann das Chipmodul 12 mit einem zur Chipkarte 10 externen Lesegerät, einer Produktionsmaschine oder auch einer Messeinrichtung kommunizieren. Das Lesegerät trägt über ein elektromagnetisches Feld Energie in die Spule 16 ein, wodurch die integrierte Schaltung 14 aktiviert und betrieben wird.

Die integrierte Schaltung 14 verfügt über einen Prozessor 17, dessen Geschwindigkeit von der Höhe der anliegenden Feldstärke abhängig ist. Ab einer minimalen elektromagnetischen Feldstärke startet der Prozessor 17 und auch die integrierte Schaltung 14 den Betrieb. Mit zunehmender Feldstärke steigt auch die Betriebsfrequenz des Prozessors 17 und auch der integrierten Schaltung 14 und somit die Verarbeitungsgeschwindigkeit. Diese Steigerung kann linear verlaufen. Ab einer Grenzfrequenz findet keine weitere Steigerung der Betriebsfrequenz mehr statt. Der Prozessor 17 und auch die integrierte Schaltung 14 befinden sich in einer Sättigung und arbeiten mit maximaler Frequenz.

Somit kann eine Korrelation von unterschiedlichen Werten der elektromagnetischen Feldstärken mit jeweils einer entsprechenden Leistung der integrierten Schaltung 14 beziehungsweise des darin befindlichen Prozessors 17 erstellt werden.

Diese Korrelation kann in einem Speicher 18 der integrierten Schaltung 14 abgelegt sein.

Die Chipkarte 10 kann eine D1-Karte sein, mit einer qualitativ hochwertigen Verbindungstechnologie zwischen integrierter Schaltung 14 und Spule 16. Vorzugsweise ist es entweder eine gelötete Verbindung oder eine geschweißte Verbindung.

Zudem kann diese Chipkarte 10 mit einem Betriebssystem (OS, Operating System) ausgestattet sein, das ein Speedtest-Kommando enthält oder unterstützt. Das Speedtest-Kommando wird mit einer Trägerfrequenz von 13,56 MHz ermittelt. Das Speedtest-Kommando kann eine einstellbare Wartezeit zum Beispiel in einem Bereich von 56 ms bis 300 ms für die Antwort der Chipkarte 10 umfassen. Mit Ablauf der Wartezeit kann die Chipkarte 10 ein Rechenergebnis ausgeben, so dass aus dem Ergebnis, das heißt einer verrichteten Arbeit oder Leistung der integrierten Schaltung 14, und der Zeitspanne der Wartezeit auf die elektromagnetische Feldstärke geschlossen werden kann.

Das Speedtest-Kommando kann derart implementiert sein, dass das Ergebnis in den Historical Bytes des ATS ausgegeben wird. Alternativ kann das Speedtest-Kommando auch über ein zusätzliches Kommando, das das OS unterstützt, verwendet werden.

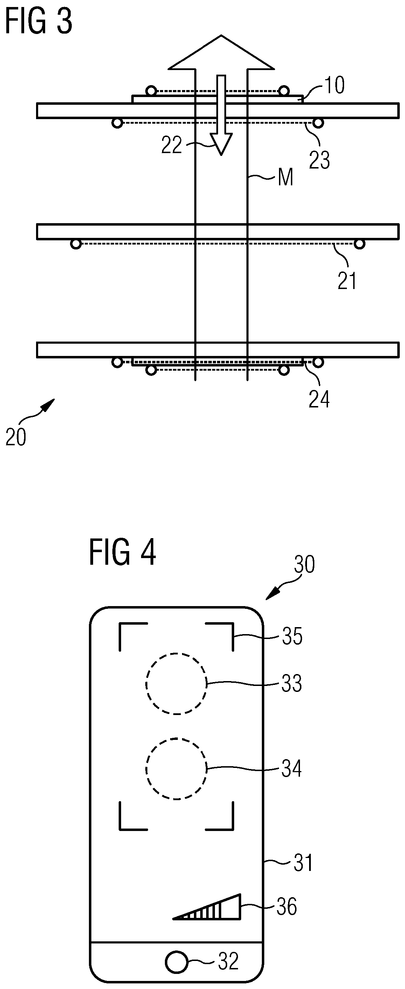

Fig. 3 zeigt eine prinzipielle Darstellung eines Kalibrierungsgeräts 20 für eine Chipkarte 10.

Über eine Spule 21 wird zunächst die elektromagnetische Feldstärke, hier die magnetische Feldstärke H, in einem Bereich von 0 A/m bis 7,5 A/m durchfahren oder eingestellt.

Ab einer gewissen Feldstärke beginnt nun die Chipkarte 10 eine Information, zum Beispiel ein ATS auszusenden. Die Chipkarte 10 sendet zudem das ermittelte Ergebnis in Form eines Parameterwerts 22 aus dem Speedtest in den Historical Bytes zurück. Dieser Parameterwert 22 kann zum Beispiel die Prozessorgeschwindigkeit, eine Zeiteinheit und/oder abgearbeitete Kommandos umfassen.

Diese Parameterwerte 22 werden von einer oberen Empfangsspule 23 und einer unteren Empfangsspule 24 empfangen und dann ausgewertet und abgelegt. Auf diese Weise kann eine Korrelation der unterschiedlichen Werte der elektromagnetischen Feldstärken mit jeweils einer entsprechenden Leistung der integrierten Schaltung 14 erstellt werden.

Für jede der ausgesendeten Feldstärken wird zum Beispiel anhand des Speedtest-Kommandos ein Parameterwert 22 für die entsprechende Leistung der integrierten Schaltung 14 aufgenommen. Da die jeweils ausgesendeten Feldstärken bekannt sind, kann so eine Korrelation der unterschiedlichen Werte der elektromagnetischen Feldstärken mit jeweils einer entsprechenden Leistung der integrierten Schaltung 14 erstellt werden.

Wenn diese Korrelation oder Beziehung in dem Kalibrierungsgerät 20 erstellt wird, kann diese in die Chipkarte 10 zum Beispiel über ein Kommando eingespielt werden. Somit kann die Chipkarte 10 jetzt direkt die Feldstärke ausgeben. Alternativ kann ein zusätzliches externes Programm die Umrechnung in die Feldstärke durchführen. Die Korrelation kann auch in der Chipkarte 10 erstellt werden, dann enthält das Speedtest-Kommando oder ein weiteres Kommando eine Angabe über den Wert der jeweiligen ausgesendeten Feldstärke.

Nachdem diese Messdaten ermittelt sind, können die Chipkarten 10 direkt in den Produktionsmaschinen eingesetzt werden. Die Chipkarte 10 liefert jetzt beim ATS direkt die nutzbare Feldstärke an das Produktionslesegerät zurück.

Fig. 4 zeigt eine prinzipielle Darstellung eines Lesegeräts 30 für eine Chipkarte 10. Hier ist beispielhaft ein Lesegerät 30 in Form eines Smartphones dargestellt. Andere Lesegeräte wie fest eingebaute Lesegeräte oder Lesegeräte ohne eigenes Display können ebenfalls verwendet werden.

Das Lesegerät 30 umfasst ein Display 31 und ein Bedienelement 32 zum Beispiel in Form einer Taste oder eines Elements auf einem Touchscreen.

Das Lesegerät 30 hat eine Sendeantenne 33 eingerichtet zum Aussenden eines elektromagnetischen Felds mit einer elektromagnetischen Feldstärke an eine Chipkarte 10. Die Sendeantenne 33 kann zum Beispiel durch eine Spule realisiert sein, deren Mittelachse senkrecht zu einer Oberfläche des Displays 31 liegt. Mit dem Bedienelement 32 kann das Verfahren beziehungsweise das Aussenden eines elektromagnetischen Felds mit einer elektromagnetischen Feldstärke an eine Chipkarte 10 gestartet werden.

Das Lesegerät 30 hat ferner eine Empfangsantenne 34 eingerichtet zum Empfangen eines Parameterwerts von der Chipkarte 10, wobei eine Höhe des Parameterwerts von der ermittelten Leistung der integrierten Schaltung 14 abhängig ist. Die Empfangsantenne 34 kann zum Beispiel durch eine Spule realisiert sein, deren Mittelachse senkrecht zu einer Oberfläche des Displays 31 liegt. Die Sendeantenne 33 und die Empfangsantenne 34 können kombiniert ausgebildet sein.

Das Lesegerät 30 umfasst eine Bereitstellungsvorrichtung, hier in Form des Displays 31, eingerichtet zum Bereitstellen mindestens eines Signals an dem Lesegerät 30 für eine verbesserte relative Ausrichtung zwischen dem Lesegerät 30 und der Chipkarte 10.

Zum Beispiel kann das Signal als eine Umrandung 35 eines Auflagebereichs für die Chipkarte 10 dargestellt werden oder diese umfassen. Die Umrandung 35 wird auf dem Display 31 dort dargestellt, an welcher Position sich die höchste oder stärkste Leistung der integrierten Schaltung 14 gemäß der elektromagnetischen Feldstärke in der Chipkarte 10 ermittelt wurde.

Alternativ oder zusätzlich kann auch ein Leistungsbalken 36 in dem Display 31 angezeigt werden. Der Benutzer hat nun mit der Chipkarte 10 die Möglichkeit die bestmögliche Lage an dem Lesegerät 30 zu ermitteln.

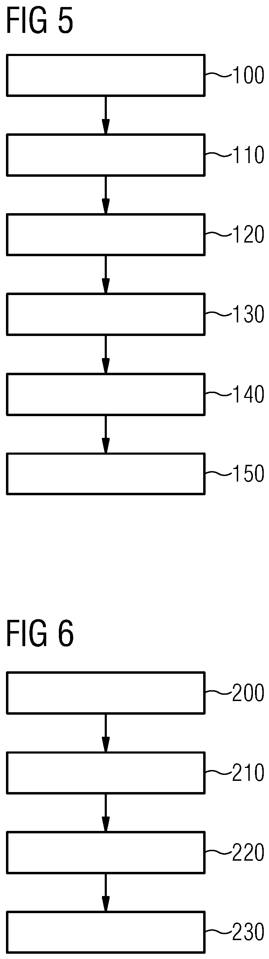

Fig. 5 zeigt ein Flussdiagramm eines Verfahrens zur Bestimmung eines Werts einer elektromagnetischen Feldstärke mittels einer Chipkarte 10.

In einem ersten Schritt 100 erfolgt ein Bereitstellen einer Chipkarte 10 mit einer Spule 16 und einer integrierten Schaltung 14 wie zuvor beschrieben.

In einem zweiten Schritt 110 erfolgt ein Kalibrieren der Chipkarte 10 mittels unterschiedlicher Werte einer elektromagnetischen Feldstärke, wobei jeweils eine Leistung der integrierten Schaltung 14 zu einem bestimmten Wert der elektromagnetischen Feldstärke ermittelt wird. Dazu kann ein Kalibrierungsgerät 20 für eine Chipkarte 10 wie in Fig. 3 dargestellt zum Einsatz gelangen.

In einem dritten Schritt 120 erfolgt ein Erstellen einer Korrelation der unterschiedlichen Werte der elektromagnetischen Feldstärken mit jeweils einer entsprechenden Leistung der integrierten Schaltung 14.

Für jede der ausgesendeten Feldstärken wird zum Beispiel anhand des Speedtest-Kommandos ein Parameterwert 22 für die entsprechende Leistung der integrierten Schaltung 14 aufgenommen. Da die jeweils ausgesendeten Feldstärken bekannt sind, kann so eine Korrelation der unterschiedlichen Werte der elektromagnetischen Feldstärken mit jeweils einer entsprechenden Leistung der integrierten Schaltung 14 erstellt werden.

Während die ersten drei Schritte100 bis 120 gewissermaßen Vorbereitungsschritte für die Chipkarte 10 waren, sind die folgenden Schritte zur eigentlichen Bestimmung eines Werts einer elektromagnetischen Feldstärke mittels Chipkarte 10.

In einem vierten Schritt 130 erfolgt ein Anlegen einer elektromagnetischen Feldstärke von unbekanntem Wert an die Chipkarte 10. Diese elektromagnetische Feldstärke wird von einem Lesegerät wie einer Produktionsmaschine, einem Smartphone, einem RFID-Transponder oder ähnlichem ausgegeben. Im Gegensatz zu den ersten drei Schritten 100 bis 120, welche in einer definierten Test- oder Kalibrierungsumgebung stattfinden, finden die weiteren Schritte in einer alltäglichen, undefinierten Umgebung statt. Daher sind die elektromagnetischen Feldstärken von unbekanntem Wert.

In einem fünften Schritt 140 erfolgt ein Ermitteln einer Leistung der integrierten Schaltung. Dies erfolgt analog zu dem zweiten Schritt 110 des Kalibrierens. Ein definierter Test oder definiertes Kommando wird in der integrierten Schaltung 14 abgearbeitet und es wird eine Leistung der integrierten Schaltung 14 durch ein abgearbeitetes Arbeitspensum während einer definierten Zeitspanne, eine Zeitangabe für ein abgearbeitetes, definiertes Arbeitspensum und/oder eine erreichte Betriebsfrequenz der integrierten Schaltung 14 ermittelt.

In einem sechsten Schritt 150 erfolgt ein Bestimmen des dieser Leistung entsprechenden Werts der elektromagnetischen Feldstärke mittels der Korrelation. Dies kann über ein einfaches Abrufen des für die ermittelte Leistung angegebenen Werts für die Feldstärke aus der Korrelation geschehen. Die Korrelation kann als Tabelle, Matrix oder ähnliches vorliegen.

Dieses Bestimmen kann in dem Lesegerät 30 und/oder in der Chipkarte 10 stattfinden. Die Kommunikation zwischen den beiden Einheiten erfolgt in drahtloser Nahfeldkommunikation, so dass die Daten schnell und sicher zwischen dem Lesegerät 30 und der Chipkarte 10 übertragen werden. Wie zuvor beschrieben kann ein Speedtest-Kommando für die Kommunikation verwendet werden.

So kann die Korrelation der unterschiedlichen Werte der elektromagnetischen Feldstärken mit jeweils einer entsprechenden Leistung der integrierten Schaltung 14 in der Chipkarte 10 abgelegt sein und der entsprechende Wert der elektromagnetischen Feldstärke von der Chipkarte 10 an das Lesegerät 30 ausgegeben werden.

Damit ist der absolute Wert der elektromagnetischen Feldstärke ohne Zuhilfenahme eines speziellen Messgeräts lediglich mit der kalibrierten Chipkarte 10 bestimmt.

Fig. 6 zeigt ein Flussdiagramm eines Verfahrens zur Kopplung eines Lesegeräts 30 und einer Chipkarte 10.

In einem ersten Schritt 200 erfolgt ein Aussenden eines elektromagnetischen Felds mit einer elektromagnetischen Feldstärke durch das Lesegerät 30. Diese elektromagnetische Feldstärke wird von einem Lesegerät wie einer Produktionsmaschine, einem Smartphone, einem RFID-Transponder oder ähnlichem in einer alltäglichen, undefinierten Umgebung ausgegeben. Daher ist die elektromagnetische Feldstärke von unbekanntem Wert.

In einem zweiten Schritt 210 erfolgt ein Ermitteln einer Leistung der integrierten Schaltung 14 gemäß der elektromagnetischen Feldstärke in der Chipkarte 10. Ein definierter Test oder eine definiertes Kommando wird in der integrierten Schaltung 14 abgearbeitet und es wird eine Leistung der integrierten Schaltung 14 durch ein abgearbeitetes Arbeitspensum während einer definierten Zeitspanne, eine Zeitangabe für ein abgearbeitetes, definiertes Arbeitspensum und/oder eine erreichte Betriebsfrequenz der integrierten Schaltung 14 ermittelt.

In einem dritten Schritt 220 erfolgt ein Übermitteln eines Parameterwerts von der Chipkarte 10 an das Lesegerät 30, wobei eine Höhe des Parameterwerts von der ermittelten Leistung abhängig ist. Die Kommunikation zwischen den beiden Einheiten erfolgt in kontaktloser Nahfeldkommunikation.

In einem vierten Schritt 230 erfolgt ein Bereitstellen eines Signals an dem Lesegerät 30 für eine verbesserte relative Ausrichtung zwischen dem Lesegerät 30 und der Chipkarte 10.

Zum Beispiel kann das Signal als eine Umrandung 35 eines Auflagebereichs für die Chipkarte 10 dargestellt werden oder diese umfassen. Die Umrandung 35 wird auf dem Display 31 dort dargestellt, an welcher Position sich die höchste oder stärkste Leistung der integrierten Schaltung 14 gemäß der elektromagnetischen Feldstärke in der Chipkarte 10 ermittelt wurde.

Alternativ oder zusätzlich kann auch ein Leistungsbalken 36 in dem Display 31 angezeigt werden. Der Benutzer hat nun mit der Chipkarte 10 die Möglichkeit die bestmögliche Lage an dem Lesegerät 30 zu ermitteln.

Mit diesen hier beschriebenen Verfahren, der Chipkarte 10 und dem Lesegerät 30 können Produktionsmaschinen und Lesegeräte für jegliche Arten von RFID-Systemen (z.B. Wristbands, ID-Cards, Sticker, etc....) hinsichtlich der Feldstärke eingestellt werden. Ein weiterer Vorteil besteht darin, die Lesegeräte auf ein einheitliches Leserfeld einzustellen, so dass die Chipkarten jeweils eine definierte Feldstärke erwarten können. Dies erlaubt eine deutlich verbesserte Übertragung zischen den Chipkarten und dem Lesegerät.

Zudem ist es möglich, die maximale Feldstärke auf oder an einem Lesegerät zu ermitteln, ohne dass dem Benutzer bekannt ist, wo sich die Spule im Lesegerät befindet. Dies ist möglich, da die Chipkarte 10 hier ein Messgerät für die von dem Lesegerät elektromagnetische Feldstärke ist.

Eine derartige Ermittlung der maximalen Feldstärke erlaubt eine Optimierung der Lage der Chipkarte gegenüber dem Lesegerät, so dass eine maximale Energieübertragung gewährleistet werden kann.

## Patentansprüche

1. Verfahren zur Bestimmung eines Werts einer elektromagnetischen Feldstärke (H) mittels einer Chipkarte (10), umfassend die Schritte:
- Bereitstellen einer Chipkarte (10) mit einer Spule (16) und einer integrierten Schaltung (14);
**dadurch gekennzeichnet, dass**:
- Kalibrieren der Chipkarte (10) mittels unterschiedlicher Werte einer elektromagnetischen Feldstärke (H), wobei jeweils eine Leistung der integrierten Schaltung (14) zu einem bestimmten Wert der elektromagnetischen Feldstärke (H) ermittelt wird;
- Erstellen einer Korrelation der unterschiedlichen Werte der elektromagnetischen Feldstärken mit jeweils einer entsprechenden Leistung der integrierten Schaltung (14);
- Anlegen einer elektromagnetischen Feldstärke (H) von unbekanntem Wert an die Chipkarte (10);
- Ermitteln einer Leistung der integrierten Schaltung (14); und
- Bestimmen des dieser Leistung entsprechenden Werts der elektromagnetischen Feldstärke (H) mittels der Korrelation.

2. Verfahren nach Anspruch 1, **dadurch gekennzeichnet, dass** die Korrelation der unterschiedlichen Werte der elektromagnetischen Feldstärken mit jeweils einer entsprechenden Leistung der integrierten Schaltung (14) in der Chipkarte (10) abgelegt wird und dass der entsprechende Wert der elektromagnetischen Feldstärke (H) von der Chipkarte (10) an das Lesegerät (30) ausgegeben wird.

3. Verfahren nach Anspruch 1 oder 2, **dadurch gekennzeichnet, dass** die Leistung der integrierten Schaltung (14) durch ein abgearbeitetes Arbeitspensum während einer definierten Zeitspanne, eine Zeitangabe für ein abgearbeitetes, definiertes Arbeitspensum und/oder eine erreichte Betriebsfrequenz der integrierten Schaltung (14) ermittelt wird.

4. Verfahren nach einem der Ansprüche 1 bis 3, **dadurch gekennzeichnet, dass** ein Lesegerät (30) ein definiertes Speedtest-Kommando an die Chipkarte (10) ausgibt.

5. Verfahren nach Anspruch 4, **dadurch gekennzeichnet, dass** die Chipkarte (10) die Leistung der integrierten Schaltung (14) und/oder den entsprechenden Wert der elektromagnetischen Feldstärke (H) in Historical Bytes des Speedtest-Kommandos ausgibt.

6. Chipkarte (10) mit einer Spule (16) und einer integrierten Schaltung (14), **dadurch gekennzeichnet, dass** in der integrierten Schaltung (14) eine Korrelation von unterschiedlichen Werten von an die Chipkarte (10) angelegten elektromagnetischen Feldstärken zu jeweils einer Leistung der integrierten Schaltung (14) abgelegt und abrufbar ist.

7. Chipkarte (10) nach Anspruch 6, **dadurch gekennzeichnet, dass** die integrierte Schaltung (14) eingerichtet ist, in Antwort auf ein elektromagnetisches Feld, das von einem Lesegerät (30) an die Chipkarte (10) ausgesendet wird, eine Leistung der integrierten Schaltung (14) zu ermitteln, den dieser Leistung entsprechenden Wert der elektromagnetischen Feldstärke (H) mittels der Korrelation zu bestimmen und den Wert an das Lesegerät (30) auszugeben.

8. Chipkarte (10) nach Anspruch 6 oder 7, **dadurch gekennzeichnet, dass** mindestens zwei Spulen vorgesehen sind, die in unterschiedlichen Ausrichtungen angeordnet sind.

## Claims

1. Method for determining a value of an electromagnetic field strength (H) by means of a chip card (10), comprising the steps of:
- Providing a chip card (10) having a coil (16) and an integrated circuit (14);
**characterized in that**:
- Calibrating the chip card (10) by means of different values of an electromagnetic field strength (H), wherein in each case a performance of the integrated circuit (14) is determined at a specific value of the electromagnetic field strength (H);
- Establishing a correlation of the different values of the electromagnetic field strengths with a respective corresponding performance of the integrated circuit (14);
- Applying an electromagnetic field strength (H) of unknown value to the chip card (10);
- Determining a performance of the integrated circuit (14); and
- Determining the value of the electromagnetic field strength (H) corresponding to this performance by means of the correlation.

2. Method according to Claim 1, **characterized in that** the correlation of the different values of the electromagnetic field strengths with a respective corresponding performance of the integrated circuit (14) is stored in the chip card (10), and **in that** the corresponding value of the electromagnetic field strength (H) is output from the chip card (10) to the reader (30).

3. Method according to Claim 1 or 2, **characterized in that** the performance of the integrated circuit (14) is determined by a processed workload during a defined time interval, a time specification for a processed, defined workload, and/or an achieved operating frequency of the integrated circuit (14).

4. Method according to one of Claims 1 to 3, **characterized in that** a reader (30) issues a defined Speedtest command to the chip card (10).

5. Method according to Claim 4, **characterized in that** the chip card (10) outputs the performance of the integrated circuit (14) and/or the corresponding value of the electromagnetic field strength (H) in Historical Bytes of the Speedtest command.

6. Chip card (10) having a coil (16) and an integrated circuit (14), **characterized in that** a correlation of different values of electromagnetic field strengths applied to the chip card (10) with a respective performance of the integrated circuit (14) is stored and retrievable in the integrated circuit (14).

7. Chip card (10) according to Claim 6, **characterized in that** the integrated circuit (14) is configured to determine a performance of the integrated circuit (14) in response to an electromagnetic field transmitted by a reader (30) to the chip card (10), to determine the value of the electromagnetic field strength (H) corresponding to this performance by means of the correlation, and to output the value to the reader (30).

8. Chip card (10) according to Claim 6 or 7, **characterized in that** at least two coils are provided which are arranged in different orientations.

## Revendications

1. Procédé de détermination d'une valeur d'une intensité de champ électromagnétique (H) au moyen d'une carte à puce (10), comprenant les étapes suivantes :
- mettre à disposition une carte à puce (10) comprenant une bobine (16) et un circuit intégré (14) ;
**caractérisé par** les étapes suivantes :
- étalonner la carte à puce (10) au moyen de différentes valeurs d'une intensité de champ électromagnétique (H), une puissance du circuit intégré (14) étant déterminée pour une valeur définie de l'intensité de champ électromagnétique (H) ;
- établir une corrélation entre les différentes valeurs des intensités de champ électromagnétique et respectivement une puissance correspondante du circuit intégré (14) ;
- appliquer une intensité de champ électromagnétique (H) de valeur inconnue à la carte à puce (10) ;
- déterminer une puissance du circuit intégré (14) ; et
- déterminer la valeur de l'intensité de champ électromagnétique (H) correspondant à cette puissance au moyen de la corrélation.

2. Procédé selon la revendication 1, **caractérisé en ce que** la corrélation des différentes valeurs des intensités de champ électromagnétique avec respectivement une puissance correspondante du circuit intégré (14) est stockée dans la carte à puce (10) et **en ce que** la valeur correspondante de l'intensité de champ électromagnétique (H) est délivrée de la carte à puce (10) au dispositif de lecture (30) .

3. Procédé selon la revendication 1 ou 2, **caractérisé en ce que** la puissance du circuit intégré (14) est déterminée par un volume de travail traité pendant une période de temps définie, une indication de temps pour un volume de travail traité défini et/ou une fréquence de fonctionnement atteinte du circuit intégré (14).

4. Procédé selon l'une des revendications 1 à 3, **caractérisé en ce qu'**un appareil de lecture (30) délivre à la carte à puce (10) une instruction de test de vitesse définie.

5. Procédé selon la revendication 4, **caractérisé en ce que** la carte à puce (10) délivre la puissance du circuit intégré (14) et/ou la valeur correspondante de l'intensité de champ électromagnétique (H) dans des octets historiques de la commande de test de vitesse.

6. Carte à puce (10) comprenant une bobine (16) et un circuit intégré (14), **caractérisée en ce qu'**une corrélation de différentes valeurs d'intensités de champ électromagnétique appliquées à la carte à puce (10) avec respectivement une puissance du circuit intégré (14) est stockée et récupérable dans le circuit intégré (14).

7. Carte à puce (10) selon la revendication 6, **caractérisée en ce que** le circuit intégré (14) est conçu pour déterminer une puissance du circuit intégré (14) en réponse à un champ électromagnétique qui est émis par un appareil de lecture (30) vers la carte à puce (10), pour déterminer, au moyen de la corrélation, la valeur de l'intensité de champ électromagnétique (H) correspondant à cette puissance et pour délivrer la valeur à l'appareil de lecture (30) .

8. Carte à puce (10) selon la revendication 6 ou 7, **caractérisée en ce qu'**il est prévu au moins deux bobines qui sont disposées dans des orientations différentes.
